# EUROPEAN PATENT SPECIFICATION

(11) **EP 3 095 586 B1**
(45) Date of publication and mention of the grant of the patent: **24.10.2018**
(21) Application number: 15168851.2
(22) Date of filing: 22.05.2015
(51) Int. Cl.: B29C 55/28, B41M 1/30, B41M 5/00, B41M 7/00, B29C 47/00, B29C 47/20, B29K 23/00

(54) **METHOD AND APPARATUS FOR FILM PRINTING**
VERFAHREN UND VORRICHTUNG ZUM FOLIENBEDRUCKEN
PROCÉDÉ ET DISPOSITIF POUR L'IMPRESSION D'UN FILM

(43) Date of publication of application: 23.11.2016
(73) Proprietor: DingZing Advanced Materials Incorporated, Kaohsiung 812 (TW)
(72) Inventor: LIN, Keng-Hsien, 812 Kaohsiung (TW)
(74) Representative: Viering, Jentschura & Partner mbB Patent- und Rechtsanwälte

(56) References cited:
- CH-A- 415 033
- US-A1- 2004 188 006
- Matila1988: "55mm High Speed HDPE/ LDPE blown film machine (CT-SP55/K2010)", , 9 January 2011 (2011-01-09), XP054976201, Retrieved from the Internet: URL:https://www.youtube.com/watch?v=kcV4SL bJD70 [retrieved on 2015-11-13]
- Matila 1988: "HDPE/LDPE BLOWN FILM MACHINE + IN-LINE TWO COLOR FLEXOGRAPHIC PRINTING MACHINE", youtube, 28 March 2014 (2014-03-28), page 1 pp., XP054977478, Retrieved from the Internet: URL:https://www.youtube.com/watch?v=8WqA_H 5JJ4w [retrieved on 2017-06-26]

## Description

### BACKGROUND OF THE INVENTION

### 1. Field of the Invention

The present invention relates to a method for producing films, and more particularly to a method and device for producing film printings.

### 2. Description of the Related Art

Due to rapid technological developments, plastic has been widely used in human daily activities, and its applications range from sporting goods, clothing, electronics, and diverse types of packaging materials, and as such it has become a critical component in society.

Regarding the production processes for certain plastic products, plastic is first melted and extruded by rollers, and then the die head of a blow molding machine is used to form a plastic film balloon that is processed based upon different requirements.

Please refer to FIG. 1, from Taiwan Invention Patent No. 1327956, "A Method of Manufacturing Extruded Shrink Film by Blow Molding", which is incorporated herein by reference and which includes the following steps: a. a polyester material is disposed in a blow molding machine, and is melted and extruded; b. a film, which is blown from a die head via a top blowing method, is shaped by a cooling wing ring or by horizontal extrusion; c. the film is directed by a molding plate to a heating section; d. the film is heated and melted; e. the melted film is blown up to a predetermined ratio by a double blow-up process.

Through the above processes, the material is processed steadily and the shrinkage percentage is improved. Therefore, the steadiness of the film in the blow molding will not be affected by an unequal film, and the defect rate can be reduced.

Through the above descriptions, there are some problems in the method of manufacturing extruded shrink film by blow molding:

### 1. Low efficiency

Because the prior art utilizes the top blowing method, with less gravity effects, the extruded film can be averaged. However, in order to print some predetermined drawings on the film based upon different requirements, the film must be coiled up for delivery to the printing factory, but this will increase delivery fees and prolong the process, decreasing the efficiency.

### 2. Easily adhere to the film

When the coiled film is stored in a warm environment, or has been stored for too long, the coiled film can be defective. Further, it easily adheres to itself and is hard to unfold it, which increases costs.

### 3. Inconvenient operation

When in the process of printing, the coiled film should be disposed on the axle of a printer, and be pulled out for delivery to the printer. The position of the plastic film must be carefully adjusted to avoid inaccuracies. Moreover, the plastic film must be pulled carefully to prevent it from breaking under stress of excessive force. Therefore, it presents a much harder and inconvenient operation.

### 4. Incompatible processes

Although there are lots of printer technologies, because they are independent from the prior blow molding machine, or even in different factories, the issues of an adapter control block between machines must be resolved. Although other processes can be completed by delivery, they are not compatible processes, which will consume unnecessary time and costs.

The above disadvantages express the problems of the method of manufacturing extruded shrink film by blow molding. Therefore, it is desirable to provide a machine to improve the above disadvantages. By shortening manufacturing times and production times to attain high efficiencies, it can create business models and enhance competitive advantages.

US 2004/0188006 A1 discloses a multi-layer printing method for printing beds and bed liners for pickup trucks, cargo vehicles and the like. The disclosed liners are designed to be a resilient barrier between the cargo area and the actual truck bed and to absorb energy and reducing denting and damaging to the bat when heavy loads are transported.

According to https://www.youtube.com/watch? v=8WqA_H5JJ4w a blown film extrusion process with subsequent printing is disclosed.

CH 415 033 A discloses an extruder plant for the blowing of thermoplastic masses for the production of dimensionally accurate tubular films, characterized in that the plant consists of a standard extruder with angular spray head, wherein the spray head for easy replacement of the sieves is provided with hinges, and the spray nozzle has wave-shaped surfaces, which exert a pressure on the extruded strand, resulting in uniformly thick films that the extruder is equipped with an oil cooling system whose oil is in a closed circuit in cavities in the extruder outer jacket while at the same time there is a combined two-stage cooling system disposed around the squeezed and blown hose, namely the first stage immediately after the drafting zone and the second cooling stage upstream of the flattening members, wherein both stages are connected by a suction system serving to extract harmful vapors due to the presence of readily vaporizing plasticizer, further characterized by the fact that the flattening members are constructed to act as additional cooling means for the hose, the hose itself moving is synchronized by a single take-off and winding system whose rotational speed is such that the hose tension remains constant during winding, that there are control devices for controlling the hose diameter and thickness, and also arrangements for automatically printing the hose with marks of various characteristics.

### SUMMARY OF EMBODIMENTS OF THE INVENTION

This object is achieved with the film printing method according to claim 1 and the film printing device according to claim 2.

Therefore, the present invention provides a method as claimed in claim 1 of film printing comprising inter alia a drying step, a heating step, an extruding step, a blow molding step, a flattening step, a first printing step, a cutting step and a rolling step. First, in a drying step, a plastic composition is dried, then in a heating step, the plastic composition is melted to provide a gelatinized combination, then in an extruding step, the gelatinized combination is extruded, then in a blow molding step, air is blown into the gelatinized combination which passes through a narrow opening to form a film composition. In a flattening step, the film composition is flattened to provide an unfinished film, then in a first printing step, predetermined drawings are printed on a surface of the unfinished film.

The film printing method includes a repeating step and a laminating step, which are between the first printing step and the cutting step. In the repeating step, the above steps from drying step to the first printing step are repeated to produce another printed film. The laminating step is to laminate two printed films together. Next, in a cutting step, the printed film is cut into a suitable length. Lastly, in a rolling step, the cut and printed film is rolled up to provide a film material.

In a preferred embodiment in the drying step, the plastic composition is selected from a set consisting of polypropylene, high-density polyethylene, low-density polyethylene, and linear low-density polyethylene.

In a preferred embodiment, the film printing method includes a first baking step, which is between the first and second printing steps, and a second baking step, which is between the second printing step and the cutting step. In the first and second baking steps, two surfaces of the printed film are baked separately.

Further, the present invention provides a film printing device according to claim 2, inter alia comprising a drying unit, a heating unit, an extruding unit, a blow molding unit, a flattening unit, a first printing unit, a cutting unit and a rolling unit.

The drying unit comprises a dryer which surrounds and defines a drying space, a feed gate on a top of the dryer, and a discharge gate at a bottom of the dryer. The plastic composition enters into the drying space through the feed gate, and after drying, is delivered from the discharge gate. The heating unit comprises a heater which surrounds and defines a mixing space, an inlet on a top of the heater, and an outlet on the heater, and after heating, the plastic composition is delivered from the discharge gate to the inlet and is stirred and melted in the mixing space to provide the gelatinized combination which flows out of the heater from the outlet. The extruding unit comprises an extruder that surrounds and defines an extruding space, an extruder entrance on the extruder and an extruder exit on the extruder; the gelatinized combination delivered from the outlet enters into the extruding space through the extruder entrance and is extruded from the extruder exit.

The blow molding unit comprises a blow molding machine which surrounds and defines a blow molding space, a blow molding entrance at a bottom of the blow molding machine, and a blow molding exit on a top of the blow molding machine; the gelatinized combination delivered from the extruder exit enters into the blow molding space through the blow molding entrance. The gelatinized combination is blown by the blow molding machine and blown from the blow molding exit to form a film composition. The flattening unit is disposed downstream from the blow molding unit and comprises two flattening machines on opposing sides which includes two rollers on opposing sides, and the film composition blown from the blow molding exit enters into the entrance of the rollers, after flattening, is delivered from the exit of the rollers to provide the unfinished film.

The first printing unit comprises a first printer, which is disposed at an end of the flattening unit and includes a first roller set and a second roller set disposed on opposing sides at intervals. The unfinished film delivered from the exit of two rollers enters into the entrance of the first and second roller sets, then, are extruded from the exit of the first and second roller sets to achieve the printed film printing. The cutting unit is disposed downstream from the first printing unit and comprises a cutting machine to cut the printed film into a suitable length. The rolling unit is disposed downstream from the cutting unit and includes a rolling machine to roll up the cut printed film.

The film printing device comprises a second printing unit disposed between the first printing unit and the cutting unit. The second printing unit comprises a second printer which is disposed at an end of the first printer, comprising a third roller set, and a fourth roller set on an opposing side at intervals. The printed film delivered from the exit of the first and second roller sets enters into the entrance of the third and fourth roller sets, and is delivered from the exit of the third and fourth roller sets.

The film printing device further comprises a baking unit disposed between the first and second printing units, and a second baking unit disposed between the second printing unit and the cutting unit. The first baking unit comprises a first heater baking the surface of the printed film, which is delivered from the exit of the first and second roller sets. The second baking unit comprises a second heater baking the surface of the printed film, which is delivered from the exit of the third and fourth roller sets.

The first roller set can include a first roller disposed on one side of the unfinished film, while the second roller set comprises plural second rollers, which are opposite to the first roller set. Further, the third roller set includes a third roller disposed on the other side of the printed film printing, while the fourth roller set comprises plural fourth rollers which are opposite to the third roller. A predetermined drawing can be disposed on the surface of the plural second and fourth rollers, so that they can print out the corresponding drawings.

The film printing device further comprises another film printing device, and the adjacent film printing devices laminate two printed films together by way of a laminating unit. The laminating unit is disposed between the first printing unit and the cutting unit and comprises a laminating machine, which includes two laminating rollers to laminate two printed films together.

The advantages of embodiments of the invention include undergoing a series of process steps, from drying, heating, blow molding, flattening, printing, baking, cutting, and rolling steps, by which a film material is provided from the plastic composition. Further, delivery times can be reduced, and the unfinished film is prevented from breaking under stress of excessive force. Therefore, various embodiments can improve operational convenience and compatible processes to save time and costs.

### BRIEF DESCRIPTION OF THE DRAWINGS

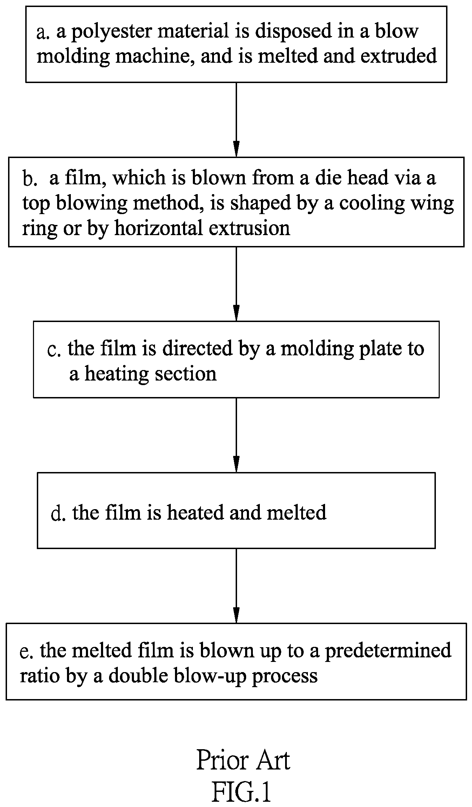

FIG. 1 is a flowchart of Taiwan Invention Patent No. 1327956, showing a method of manufacturing extruded shrink film by blow molding;
FIG. 2 is a flowchart depicting a first embodiment method (not according to the invention);
FIG. 3 is a schematic depicting components of a first embodiment device (not according to the invention);
FIG. 4 is a flowchart depicting a second embodiment method according to the present invention; and
FIG. 5 is a partial schematic depicting components of a second embodiment device.

### DETAILED DESCRIPTION OF THE PREFERRED EMBODIMENTS

Specific structural and functional details disclosed herein will become apparent from the following description of the present invention taken in conjunction with the accompanying drawings.

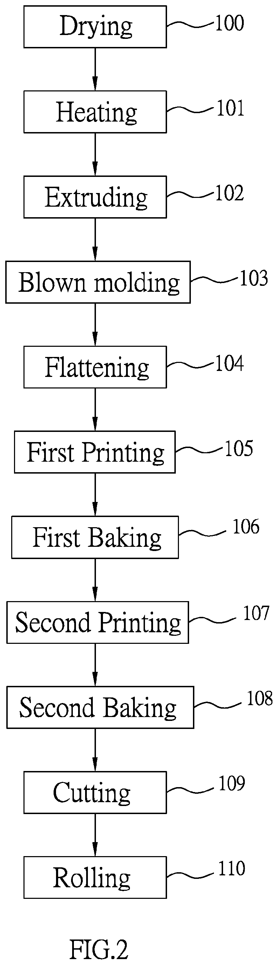

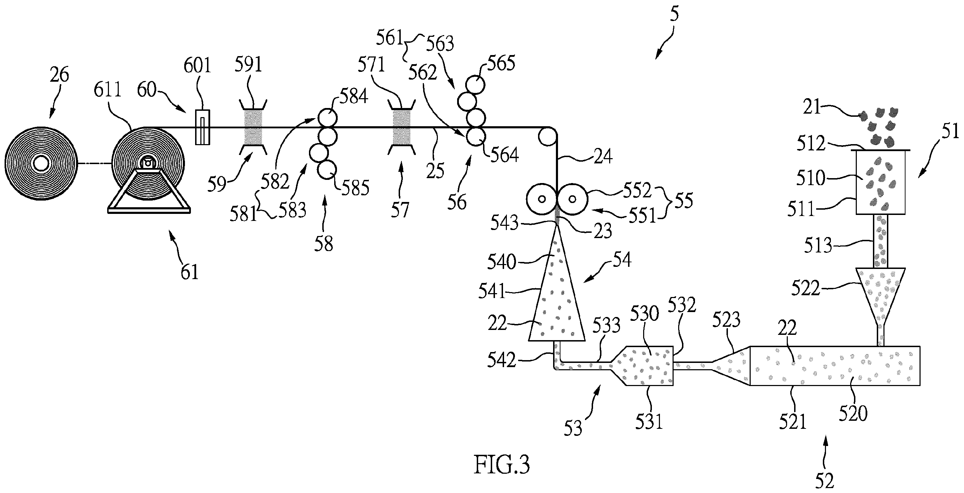

With reference to FIGs. 2 and 3, which depict a reference process and device, a first embodiment is depicted and comprises a drying step 100, a heating step 101, an extruding step 102, a blow molding step 103, a flattening step 104, a first printing step 105, a first baking step 106, a second printing step 107, a second baking step 108, a cutting step 109 and a rolling step 110.

First, in the drying step 100, a plastic composition 21 is dried. The plastic composition 21 is selected from a set consisting of polypropylene, high-density polyethylene, low-density polyethylene, and linear low-density polyethylene. Based on different process demands, the plastic composition 21 can be chosen from different polyolefins or other additives can be added, which are not limited by above materials.

Then, in the heating step 101, the plastic composition 21 is melted to provide a gelatinized combination 22 and in the extruding step 102, the gelatinized combination 22 is extruded.

In the blow molding step 103, air is blown into the gelatinized combination 22 which passes through a narrow opening to become a film composition 23.

Then, in a flattening step 104, the film composition 23 is flattened and an unfinished film 24 is provided.

In some embodiments, a stretching step (not depicted in the figures) can be added after the flattening step 104. In the stretching step, the unfinished film 24 is stretched based on different demands.

Then, in the first printing step 105, predetermined drawings are printed on a surface of the unfinished film to provide a printed film 25.

Then, in the first baking step 106, one surface of the printed film printing 25 is baked.

Then, in the second printing step 107, predetermined drawings are printed on the other surface of the unfinished film to provide a printed film printing 25.

Then, in the second baking step 108, the other surface of the printed film 25 is baked.

Particularly, when the user prints on a surface of the printed film 25, the second printing step 107 and the second baking step 108 can be skipped base upon the user's requirements.

Then, in the cutting step 109, the printed film 25 is cut into a suitable length.

Lastly, in the rolling step 110, the cut printed film 25 is rolled up to provide a film material 26.

With reference to FIG 3, a film printing device 5 in accordance with the above methods comprises a drying unit 51, a heating unit 52, an extruding unit 53, a blow molding unit 54, a flattening unit 55, a first printing unit 56, a first baking unit 57, a second printing unit 58, a second baking unit 59, a cutting unit 60, and a rolling unit 59 is disclosed.

The drying unit 51 comprises a dryer 511 which surrounds and defines a drying space 510. A feed gate 512 is disposed on a top of the dryer 511, and a discharge gate 513 is disposed at a bottom of the dryer 511. The plastic composition 21 enters into the drying space 510 through the feed gate 512, and after drying, is delivered from the discharge gate 513.

The dryer 511 can dry the plastic composition 21 in advance to vaporize extra moisture and to prevent the plastic composition 21 from being impacted by bubbles on the surface, so that the defect rate can be reduced.

The heating unit 52 comprises a heater 521 which surrounds and defines a mixing space 520. An inlet 522 is disposed on a top of the heater 521, and the heater 521 further includes an outlet 523. After heating, the plastic composition 21 is delivered from the discharge gate 513 to the heater inlet 522 and enters into the mixing space 520. The heater 521 mixes the plastic composition 21 at high speeds and stirs it, so that the plastic composition 21 is melted to form the gelatinized combination 22 which flows out from the heater 521 from heater outlet 523.

In the first embodiment, while the heater 521 heats up the plastic composition 21, the temperature is set between 150 °C to 300 °C, the pressure is set between 34.47 to 206.84 bar (500 to 3000 psi), and the heating time is set between 3 and 30 minutes. The above factors disclosed herein are only by way of example, and in various embodiments may be adjusted in accordance with the materials being processed.

The extruding unit 53 comprises an extruder 531 which surrounds and defines an extruding space 530. The extruder 531 includes an extruder entrance 532 and an extruder exit 533. The gelatinized combination 22 delivered from the outlet 523 enters into the extruding space 530 through the extruder entrance 532 and is extruded from the extruder exit 533.

Notably, a filter can be disposed at the extruder exit 533 to filter the gelatinized combination 22 extruded from the extruder exit 533, so that the quality of the gelatinized combination 22 can be improved.

The blow molding unit 54 comprises a blow molding machine 541 which surrounds and defines a blow molding space 540. A blow molding entrance 542 is disposed at a bottom of the blow molding machine 541, and a blow molding exit 543 is disposed on a top of the blow molding machine 541. The gelatinized combination 22 delivered from the extruder exit 533 enters into the blow molding space 540 through the blow molding entrance 542, and the gelatinized combination 22 is blown by the blow molding machine 541, and blown from the blow molding exit 543 to provide the film composition 23.

In the first embodiment, the width of the blow molding exit 543 is around 0.01 mm to 1 mm, and is adjustable to change the thickness of the film composition 23 based upon the user's requirements.

The flattening unit 55 is disposed downstream from the blow molding unit 54 and comprises two flattening machines 551 on opposing sides of the extruded film composition 23, which include two rollers 552 on the opposing sides. The film composition 23 blown from the blow molding exit 543 enters into the entrance of the rollers 552, and after flattening, is delivered from the exit of the rollers 552 to provide the unfinished film 24.

Flattening of the film composition 23 blown from the blow molding exit 543 can reduce the problem of unequal thickness of the unfinished film 24.

In the embodiment, based upon the user's requirements, an extending unit (not depicted in the figures) can be added downstream from the flattening unit 55, comprising a roller group set at intervals. The unfinished film 24 delivered from the exit of two rollers 552 enters into the entrance of the roller group to be extended, and is delivered from the exit of the roller group to the first printing unit 56 to control the thickness of the unfinished film 24.

The first printing unit 56 comprises a first printer 561, which is disposed downstream from the flattening unit 55 and includes a first roller set 562 and a second roller set 563 disposed on opposing sides at intervals. The unfinished film 24 delivered from the exit of two rollers enters into the entrance of the first and second roller sets 562, 563, and is then extruded from the exit of the first and second roller sets 562, 563 to provide a single-sided printed film 25.

The first roller set 562 comprises a first roller 564 disposed on one side of the unfinished film, while the second roller set 563 comprises plural second rollers 565 which are opposite to the first roller 564. In the first embodiment, there are three second rollers 565, and the spin of middle second roller 565 is opposite to that of the other second rollers 565. Moreover, a predetermined drawing is disposed on the surfaces of the plural second roller, so that they can print out the drawings.

In some embodiments, a first oil tank filled with oil can be provided with the second roller set 563 for fixing purposes, and it can be disposed beside the second roller set 563.

The first baking unit 57 comprises a first oven 571 baking the surface of the film printing 25, which is delivered from the exit of the first and second roller sets 562, 563. It can bake the drawing printed on the printed film 25, so that it reduces oil drippings, deformation of the drawings or the adhesion of the printed film 25.

The second printing unit 58 comprises a second printer 581, which is disposed downstream from the first printing unit 561 and includes a third rollers set 582 and a fourth roller set 583 disposed on opposing sides at intervals. The printed film 25 delivered from the exit of the first and second roller sets 562, 563 enters into the entrance of the third and fourth roller sets 582, 583, and then, being extruded from the exit of the third and fourth roller sets 582, 583 provides a double-sided printed film 25.

The third roller set 582 can include a third roller 584 disposed on one side of the printed film 25, while the fourth roller set 583 comprises plural fourth rollers 585 which are opposite to the third roller 584. In the first embodiment, there are three fourth rollers 585, and the spin of middle fourth roller 585 is opposite to that of the other fourth rollers 585. Predetermined drawings can be disposed on the surfaces of the plural fourth rollers, so that they can print out the drawings.

Similarly, a second oil tank filled with oil can be provided with the fourth roller set 583 for fixing purposes, and it can be disposed beside the fourth roller set 583.

The second baking unit 59 comprises a second oven 591 baking the surface of the printed film 25, which is delivered from the exit of the third and fourth roller sets 582, 583. It can bake the drawing printed on the film printing 25 to improve the process.

Particularly, when the user prints on one surface of the printed film 25, the second printing unit 58 and the second baking unit 59 can be skipped based upon the user's requirements.

The cutting unit 60 disposed downstream from the second printing unit 59 and comprises a cutting machine 601 to cut the printed film 25 into a suitable length. The rolling unit 61 disposed downstream from the cutting unit 60 includes a rolling machine 611 to roll up the printed film 25 to provide the film material 26.

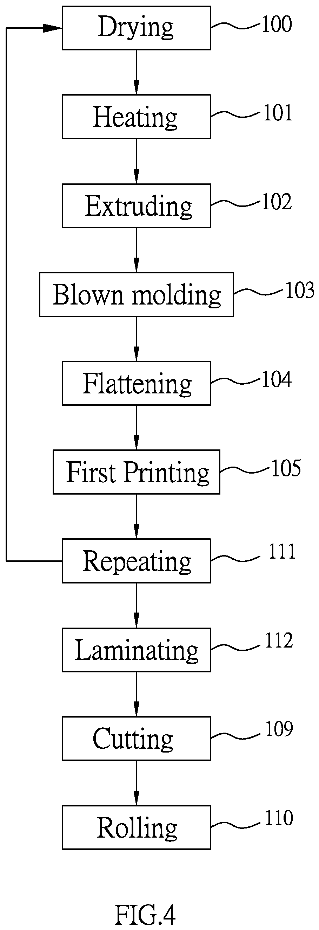

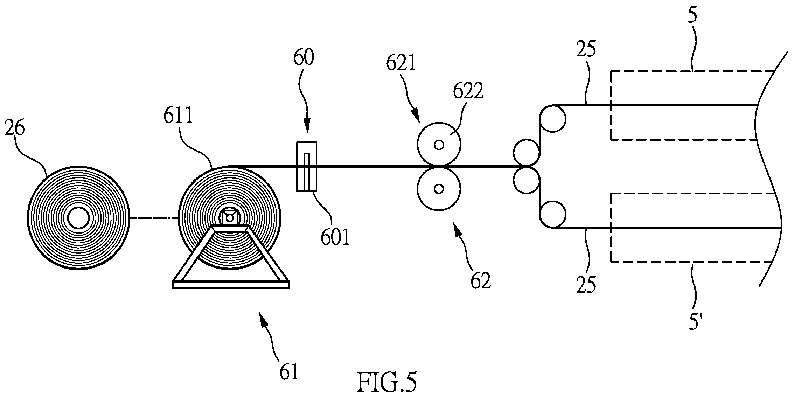

With reference to FIGs. 4 and 5, a method and a device according to the present invention are depicted. The method and the device arc similar to the above described reference method and reference device (FIGs. 2 and 3), and so common features are not described again. Regarding the differences, they include a repeating step 111 and a laminating step 112, and forgo the first baking step 106, the second printing step 107 and the second baking step 108.

Moreover, the second embodiment film printing device comprises another film printing device 5', and they both forgo the first baking unit 57, the second printing unit 58 and the second baking unit 59. A laminating unit 62 is added downstream from the two film printing devices 5, 5', and is disposed between the first printing unit 56 and the cutting unit 60.

The repeating step 111 and the laminating step 112 are set between the first printing step 105 and the cutting step 109. In the repeating step 111, the above steps from drying step 100 to the first printing step 105 are repeated to produce another printed film 25. The laminating step 112 is to laminate the two printed films 25 together.

The adjacent film printing devices 5, 5' laminate two printed films 25 together through a laminating unit 62. The laminating unit 62 comprises a laminating machine 621, which includes two laminating rollers 622 to laminate two first printings 25 together.

Because two film printings 25 pass through the first printing unit 56 separately, different drawings can be printed on the surface of the unfinished film 24, or the drawings can be crisscross printed on the surface of the film 24 to increase the diversity of the film material 26.

With the above-mentioned descriptions, following benefits can be obtained:

### 1. High efficiency

After the flattening step 104, the film 24 undergoes the first printing step 105 and the second printing step 107, which reduces the time for rolling up the unfinished film 24 and for delivery to the printing factory. Therefore, the efficiency of the manufacturing processes is improved.

### 2. Convenient operation

Because the first oven 571 can bake the drawing printed on the printed film 25, it reduces oil drippings, deformation of the drawings or the adhesion of the printed film 25.

### 3. Improving film quality

By flattening the film composition 23 blown from the blow molding exit 543, the problem of unequal thickness of the unfinished film is reduced.

### 4. Compatible processes

Undergoing a series of processing steps, from drying, heating, blow molding, flattening, printing, baking, cutting and rolling steps, the final film material 26 is provided from the plastic composition 21. During the processes, delivery time and inaccuracies of printing can be reduced, and the unfinished film 24 is prevented from being broken by excessive force. Therefore, operational convenience and compatible processes are improved to save time and costs.

Consequently, embodiments of the present invention, through the drying unit 51, the heating unit 52, the extruding unit 53, the blow molding unit 54, the flattening unit 55, the first printing unit 56, the first baking unit 57, the second printing unit 58, and the second baking unit 59, the cutting unit 60 and the rolling unit 61, the plastic composition 21 undergoes the steps from drying, heating, blow molding, flattening, printing, baking, cutting, and finally to rolling steps, so that the final film material 26 is provided. This can reduce the time for rolling up the unfinished film 24 for delivery to a printing factory for printing, and improve the efficiency of the manufacturing processes and operational convenience, enhancing competitive advantages.

## Claims

1. A film printing method comprising:
a drying step (100) for drying a plastic composition (21);
a heating step (101) for melting the plastic composition (21) to provide a gelatinized combination (22);
an extruding step (102) following the heating step for extruding the gelatinized combination (22);
a blow molding step (103), wherein air is blown into the gelatinized combination (22) to provide a film composition (23);
a flattening step (104) for flattening the film composition (23) to provide an unfinished film (24);
a first printing step (105) for printing a drawing on a surface of the unfinished film (24) to provide a printed film (25);
a cutting step (109) for cutting the printed film (25) into predetermined lengths; and
a rolling step (110) for rolling up the printed film (25) to provide a final film material (26), wherein
the method further includes
a repeating step (111) and a laminating step (112) which are set between the first printing step (105) and the cutting step (109); wherein in the repeating step (111), the above steps from drying step (100) to the first printing step (105) are repeated to produce another printed film (25), and the laminating step (112) laminates the two printed films (25) together.

2. A film printing device (5) comprising:
a drying unit (51), comprising a dryer (511) which surrounds and defines a drying space (510), a feed gate (512) disposed on a top of the dryer (512), and a discharge gate (513) disposed at a bottom of the dryer (511), a plastic composition (21) capable of entering into the drying space (510) through the feed gate (512), and after drying, being delivered from the discharge gate (513);
a heating unit (52), comprising a heater (521) which surrounds and defines a mixing space (520), the heater (521) comprising an outlet and an inlet on a top of the heater (521); wherein after heating, the plastic composition (21) is delivered from the discharge gate (513) to the inlet (522) and is stirred and melted in the mixing space (520) to provide a gelatinized combination (22) which flows out of the heater (521) from the outlet;
an extruding unit (53), comprising an extruder (531) which surrounds and defines an extruding space (530), an extruder entrance (532) on the extruder (531) and an extruder exit (533) on the extruder (531); wherein the gelatinized combination (22) is delivered from the outlet (523) and enters into the extruding space (530) through the extruder entrance (532) and is extruded from the extruder exit (533);
a blow molding unit (54), comprising a blow molding machine (540) which surrounds and defines a blow molding space (540), a blow molding entrance (532) at a bottom of the blow molding machine (540), a blow molding exit (543) on a top of the blow molding machine (540), the gelatinized combination (22) delivered from the extruder exit (533) entering into the blow molding space (540) through the blow molding entrance (532), the gelatinized combination (22) blown by the blow molding machine (540) and blown from the blow molding exit (543) to provide a film composition (23);
a flattening unit (55) disposed downstream from the blow molding unit (54) and comprising two opposing flattening machines (551) that include two rollers (552) on opposing side of the film, wherein the film composition (23) blown from the blow molding exit (543) enters into the entrance of rollers (552), and after flattening, is delivered from the exit of the rollers (552) to provide an unfinished film (24);
a first printing unit (56), comprising a first printer (561) which is disposed downstream from the flattening unit (55) and includes a first roller set (562) and a second roller set (563) disposed on opposing sides; wherein the unfinished film (24) delivered from the exit of the flattening unit (55) enters into the entrance of the first and second roller sets (562, 563) and then exits from the first and second roller sets (562, 563) as a printed film (25);
a cutting unit (60) disposed downstream from the first printing unit (56) and comprising a cutting machine (601) to cut the printed film (25) into predetermined lengths; and
a rolling unit (61) disposed downstream from the cutting unit (60) and including a rolling machine (611) to roll up the cut and printed film (25); further comprising a second printing unit (58) disposed between the first printing unit (56) and the cutting unit (60), the second printing unit (58) including a second printer (581) which is disposed downstream from the first printer (561) and comprising a third roller set (582) and a fourth roller set (583) on opposing sides; wherein the printed film (25) delivered from the first printing unit (56) enters into the third and fourth roller sets (582, 583) and exits from the third and fourth roller sets (582, 583) as a doubly-printed film (25), a first baking unit (57) disposed between the first and second printing units (58), and a second baking unit (59) disposed between the second printing unit (58) and the cutting unit (60); wherein the first baking unit (57) comprises a first oven (571) for baking a surface of the printed film (25) that is delivered from the first printing unit (56), and the second baking unit (59) comprises a second oven (591) for baking a surface of the printed film (25) which is delivered from the second printing unit (58), wherein the first roller set (562) which comprises a first roller (564) disposed on one side of the unfinished film, and the second roller set (563) comprises plural second rollers (565) which are opposite to the first roller (564), and wherein the third roller set (582) comprises a third roller (584) disposed on a side of the printed film (25), while the fourth roller set (583) comprises plural fourth rollers (585) which are opposite to the third roller (584), and wherein drawings are disposed on surfaces of the plural second and fourth rollers (565, 585) so that the plural second and fourth rollers (565, 585) print corresponding drawings on the printed film (25); further comprising another film printing device (5'), and the film printing devices (5, 5') are configured to laminate two printed films (25) together by way of a laminating unit (62); the laminating unit (62) disposed between the first printing unit (56) and the cutting unit (60) and comprises a laminating machine (621) which includes two laminating rollers (622) to laminate the two printed films (25) together.

## Patentansprüche

1. Ein Foliendruckverfahren, umfassend:
einen Trocknungsschritt (100) zum Trocknen einer Kunststoffzusammensetzung (21);
einen Erwärmungsschritt (101) zum Schmelzen der Kunststoffzusammensetzung (21), um eine gelatinierte Zusammensetzung (22) bereitzustellen;
einen Extrusionsschritt (102), der auf den Erwärmungsschritt folgt, zum Extrudieren der gelatinierten Zusammensetzung (22);
einen Blasformschritt (103), wobei Luft in die gelatinierte Zusammensetzung (22) geblasen wird, um eine Folienzusammensetzung (23) bereitzustellen;
einen Abflachungsschritt (104) zum Abflachen der Folienzusammensetzung (23), um eine unfertige Folie (24) bereitzustellen;
einen ersten Druckschritt (105) zum Drucken einer Zeichnung auf eine Oberfläche der unfertigen Folie (24), um eine bedruckte Folie (25) bereitzustellen;
einen Schneideschritt (109) zum Schneiden der bedruckten Folie (25) in vorbestimmte Längen; und
einen Rollschritt (110) zum Aufrollen der bedruckten Folie (25), um ein finales Folienmaterial (26) bereitzustellen, wobei
das Verfahren ferner
einen Wiederholungsschritt (111) und einen Laminierungsschritt (112) einschließt, welche zwischen den ersten Druckschritt (105) und den Schneideschritt (109) festgelegt sind; wobei in dem Wiederholungsschritt (111) die oberen Schritte vom Trocknungsschritt (100) bis zum ersten Druckschritt (105) wiederholt werden, um eine weitere bedruckte Folie (25) zu erzeugen und der Laminierungsschritt (112) die zwei bedruckten Folien (25) zusammen laminiert.

2. Eine Foliendruckvorrichtung (5), umfassend:
eine Trocknungseinheit (51), die einen Trockner (511) umfasst, der einen Trocknungsraum (510) umgibt und definiert,
ein auf einer Oberseite des Trockners (512) angeordnetes Beschickungsgate (512), und ein an einer Unterseite des Trockners (511) angeordnetes Ausgabegate (513), eine Kunststoffzusammensetzung (21), die fähig ist durch das Beschickungsgate (512) in den Trocknungsraum (510) einzudringen und nach dem Trocknen durch das Ausgabegate (513) abgegeben zu werden;
eine Erwärmungseinheit (52), die einen Heizer (521) umfasst, der einen Mischraum (520) umgibt und definiert, wobei der Heizer (521) einen Auslass und einen Einlass auf einer Oberseite des Heizers (521) umfasst; wobei die Kunststoffzusammensetzung (21) nach dem Erwärmen durch das Ausgabegate (513) zum Einlass (522) gebracht wird und in dem Mischraum (520) gerührt und geschmolzen wird, um eine gelatinierte Zusammensetzung (22) bereitzustellen, die durch den Auslass aus dem Heizer (521) herausfließt;
eine Extrudiereinheit (53), die einen Extruder (531) umfasst, der einen Extrudierraum (530) umgibt und definiert, einen Extrudereingang (532) auf dem Extruder (531) und einen Extruderausgang (533) auf dem Extruder (531); wobei die gelatinierte Zusammensetzung (22) vom Ausgang (523) abgegeben wird und durch den Extrudereingang (532) in den Extrudierraum (530) eintritt und durch den Extruderausgang (533) extrudiert wird;
eine Blasformeinheit (54), die eine Blasformmaschine (540) umfasst, die einen Blasformraum (540) umgibt und definiert, ein Blasformeingang (532) an einer Unterseite der Blasformmaschine (540), einen Blasformausgang (543) auf einer Oberseite der Blasformmaschine (540), wobei die gelatinierte Zusammensetzung (22) durch den Extrudierausgang (533) gebracht wird und in den Blasformraum (540) durch den Blasformeingang (532) eintritt, wobei die gelatinierte Zusammensetzung (22), die durch die Blasformmaschine (540) geblasen wird, durch den Blasformausgang (543) geblasen wird, um eine Folienzusammensetzung (23) bereitzustellen;
eine Abflachungseinheit (55), die nach der Blasformeinheit (54) angeordnet ist und zwei gegenüberliegende Abflachungsmaschinen (551) umfasst, die zwei Walzen (552) auf gegenüberliegenden Seiten der Folie beinhalten, wobei die vom Blasformausgang (543) geblasene Folienzusammensetzung (23) in den Eingang der Walzen (552) eintritt und nach dem Abflachen durch den Ausgang der Walzen (552) gebracht wird, um eine unfertige Folie (24) bereitzustellen;
eine erste Druckeinheit (56), die einen ersten Drucker (561) umfasst, der nach der Abflachungseinheit (55) angeordnet ist und einen ersten Walzen-Satz (562) und einen zweiten Walzen-Satz (563) beinhaltet, die auf gegenüberliegenden Seiten angeordnet sind; wobei die unfertige Folie (24), die von dem Ausgang der Abflachungseinheit (55) geliefert wird in den Eingang des ersten und des zweiten Walzen-Satzes (562, 563) eintritt und dann durch den ersten und zweiten Walzen-Satz als eine bedruckte Folie (25) austritt;
eine Schneideeinheit (60), die nach der ersten Druckeinheit (56) angeordnet ist und eine Schneidemaschine (601) umfasst, um die bedruckten Folien (25) in vorbestimmte Längen zu schneiden; und
eine Rolleneinheit (61), die nach der Schneideeinheit (60) angeordnet ist und eine Rollenmaschine (611) beinhaltet, um die geschnittene und bedruckte Folie (25) zusammen zu rollen;
ferner ist eine zweite Druckeinheit (58) umfasst, die zwischen der ersten Druckeinheit (56) und der Schneideeinheit (60) angeordnet ist, wobei die zweite Druckeinheit (58) einen zweiten Drucker (581) beinhaltet, welcher nach dem ersten Drucker (561) angeordnet ist und einen dritten Walzen-Satz (582) und einen vierten Walzen-Satz (583) auf gegenüberliegenden Seiten umfasst; wobei die bedruckte Folie (25), die von der ersten Druckeinheit (56) geliefert wird, in den dritten und vierten Walzen-Satz (582, 583) eintritt und durch den dritten und vierten Walzen-Satz (582, 583) als eine doppelt-bedruckte Folie (25) austritt, eine erste Härteeinheit (57), die zwischen der ersten und zweiten Druckeinheit (58) angeordnet ist und eine zweite Härteeinheit (59), die zwischen der zweiten Druckeinheit (58) und der Schneideeinheit (60) angeordnet ist; wobei die erste Härteeinheit (57) einen ersten Ofen (571) zum Härten einer Oberfläche der bedruckten Folie (25) umfasst, die von der ersten Druckeinheit (56) geliefert wird und wobei die zweite Härteeinheit (59) einen zweiten Ofen (591) zum Härten einer Oberfläche der bedruckten Folie (25) umfasst, die von der zweiten Druckeinheit (58) geliefert wird, wobei der erste Walzen-Satz (562) eine erste Walze (564) umfasst, die auf einer Seite der unfertigen Folie angeordnet ist und der zweite Walzen-Satz (563) mehrere zweite Walzen (565) umfasst, die gegenüber der ersten Walze (564) liegen und wobei der dritte Walzen-Satz (582) eine dritte Walze (584) umfasst, die auf einer Seite der bedruckten Folie (25) angeordnet ist, während der vierte Walzen-Satz (583) mehrere vierte Walzen (585) umfasst, die gegenüber der dritten Walze (584) liegen und wobei Zeichnungen auf Oberflächen der mehreren zweiten und vierten Walzen (565, 585) angeordnet sind, so dass die mehreren zweiten und vierten Walzen (565, 585) zugehörige Zeichnungen auf die bedruckte Folie (25) drucken; wobei ferner eine weitere Foliendruckvorrichtung (5') umfasst ist und die Foliendruckvorrichtungen (5, 5') konfiguriert sind, um zwei bedruckte Folien (25) durch eine Laminierungseinheit (62) zusammen zu laminieren; wobei die Laminierungseinheit (62) zwischen der ersten Druckeinheit (56) und der Schneideeinheit (60) angeordnet ist und eine Laminiermaschine (621) umfasst, die zwei Laminierwalzen (622) beinhaltet, um die zwei bedruckten Folien (25) zusammen zu laminieren.

## Revendications

1. Procédé d'impression sur film comprenant :
une étape de séchage (100) pour le séchage d'une composition plastique (21) ;
une étape de chauffage (101) pour le chauffage de la composition plastique (21) pour réaliser une combinaison gélatineuse (22) ;
une étape d'extrusion (102) après l'étape de chauffage pour l'extrusion de la combinaison gélatineuse (22) ;
une étape de moulage par soufflage (103), dans laquelle de l'air est soufflé dans la combinaison gélatineuse (22) afin d'obtenir une composition de film (23) ;
une étape d'aplatissement (104) pour l'aplatissement de la composition de film (23) afin d'obtenir un film non fini (24) ;
une première étape d'impression (105) pour l'impression d'un dessin sur une surface du film non fini (24) afin d'obtenir un film imprimé (25) ;
une étape de découpe (109) pour la découpe du film imprimé (25) en longueurs prédéterminées ; et
une étape de roulage (110) pour le roulage du film imprimé (25) afin d'obtenir un matériau de film final (26),
ce procédé comprenant en outre :
une étape de répétition (111) et une étape de laminage (112) qui sont placées entre la première étape d'impression (105) et l'étape de découpe (109) ; moyennant quoi, dans l'étape de répétition (111), les étapes ci-dessus, de l'étape de séchage (100) à la première étape d'impression (105), sont répétées afin de produire un autre film imprimé (25) et l'étape de laminage (112) lamine les deux films imprimés (25) ensemble.

2. Dispositif d'impression sur film (5) comprenant :
une unité de séchage (51), comprenant un dispositif de séchage (511) qui entouré et définit un espace de séchage (510), une porte d'alimentation (512) disposée en haut du dispositif de séchage (512) et une porte d'évacuation (513) disposée en bas du dispositif de séchage (511), une composition plastique (21) capable d'entrer dans l'espace de séchage (510) à travers la porte d'alimentation (512) et, après le séchage, d'être délivrée par la porte d'évacuation (513) ;
une unité de chauffage (52) comprenant un dispositif de chauffage (521) qui entoure et définit un espace de mélange (520), le dispositif de chauffage (521) comprenant une sortie et une entrée en haut du dispositif de chauffage (521) ; moyennant quoi, après le chauffage, la composition plastique (21) est délivrée par la porte d'évacuation (513) vers l'entrée (522) et est agitée et fondue dans l'espace de mélange (520) afin d'obtenir une combinaison gélatineuse (22) qui s'écoule hors du dispositif de chauffage (521) par la sortie ;
une unité d'extrusion (53) comprenant une extrudeuse (531) qui entoure et définit un espace d'extrusion (530), une entrée d'extrudeuse (532) sur l'extrudeuse (531) et une sortie d'extrudeuse (533) sur l'extrudeuse (531) ; la combinaison gélatineuse (22) étant délivrée par la sortie (523) et entrant dans l'espace d'extrusion (530) à travers l'entrée d'extrudeuse (532) et étant extrudée à partir de la sortie de l'extrudeuse (533) ;
une unité de moulage par soufflage (54) comprenant une machine de moulage par soufflage (540) qui entoure et définit un espace de moulage par soufflage (540), une entrée de moulage par soufflage (532) en bas de la machine de moulage par soufflage (540), une sortie de moulage par soufflage (543) en haut de la machine de moulage par soufflage (540), la combinaison gélatineuse (22) délivrée par la sortie de l'extrudeuse (533) entrant dans l'espace de moulage par soufflage (540) à travers l'entrée de moulage par soufflage (532), la combinaison gélatineuse (22) étant soufflée par la machine de moulage par soufflage (540) et soufflée par la sortie de moulage par soufflage (543) afin d'obtenir une composition de film (23) ;
une unité d'aplatissement (55) disposée en aval de l'unité de moulage par soufflage (54) et comprenant deux machines d'aplatissement opposées (551) qui comprennent deux rouleaux (552) sur des côtés opposés du film, la composition de film (23) soufflée par la sortie de moulage par soufflage (543) entrant dans l'entrée des rouleaux (552) et, après aplatissement, est délivrée par la sortie des rouleaux (552) afin d'obtenir un film non fini (24) ;
une première unité d'impression (56) comprenant une première imprimante (561) qui est disposée en aval de l'unité d'aplatissement (55) et qui comprend un premier ensemble de rouleaux (562) et un deuxième ensemble de rouleaux (563) disposé sur des côtés opposés ; le film non fini (24) délivré de la sortie de l'unité d'aplatissement (55) entrant dans l'entrée des premier et deuxième ensembles de rouleaux (562, 563) puis sortant des premier et deuxième ensembles de rouleaux (562, 563) sous la forme d'un film imprimé (25) ;
une unité de découpe (60) disposée en aval de la première unité d'impression (56) et comprenant une machine de découpe (601) pour découper le film imprimé (25) en longueurs prédéterminées ; et
une unité de roulage (61) disposée en aval de l'unité de découpe (60) comprenant une machine de roulage (611) pour le roulage du film imprimé et découpé (25); comprenant en outre une deuxième unité d'impression (58) disposée entre la première unité d'impression (56) et l'unité de découpe (60), la deuxième unité d'impression (58) comprenant une deuxième imprimante (581) qui est disposée en aval de la première imprimante (561) et comprenant un troisième ensemble de rouleaux (582) et un quatrième ensemble de rouleaux (583) sur des côtés opposés ; le film imprimé (25) délivré de la première unité d'impression (56) entrant dans les troisième et quatrième ensembles de rouleaux (582, 583) et sortant des troisième et quatrième ensembles de rouleaux (582, 583) sous la forme d'un film doublement imprimé (25), une première unité de cuisson (57) disposée entre la première et la deuxième unités d'impression (58), et une deuxième unité de cuisson (59) disposée entre la deuxième unité d'impression (58) et l'unité de découpe (60) ; la première unité de cuisson (57) comprenant un premier four (571) pour la cuisson d'une surface du film imprimé (25) qui est délivré par la première unité d'impression (56) et la deuxième unité de cuisson (59) comprenant un deuxième four (591) pour la cuisson d'une surface du film imprimé (25) qui est délivré par la deuxième unité d'impression (58), le premier ensemble de rouleaux (562) comprenant un premier rouleau (564) disposé sur un côté du film non fini et le deuxième ensemble de rouleaux (563) comprenant plusieurs deuxièmes rouleaux (565) qui sont opposés au premier rouleau (564) et le troisième ensemble de rouleaux (582) comprenant un troisième rouleau (584) disposé sur un côté du film imprimé (25), tandis que le quatrième ensemble de rouleaux (583) comprend plusieurs quatrièmes rouleaux (585) qui sont opposés au troisième rouleau (584) et des dessins étant disposés sur des surfaces des plusieurs deuxièmes et quatrièmes rouleaux (565, 585) de façon à ce que les plusieurs deuxièmes et quatrièmes rouleaux (565, 585) impriment des dessins correspondants sur le film imprimé (25) ; comprenant en outre un autre dispositif d'impression sur film (5') et les dispositifs d'impression sur film (5, 5') étant conçus pour laminer deux films imprimés (25) ensemble au moyen d'une unité de laminage (62) ; l'unité de laminage (62) étant disposée entre la première unité d'impression (56) et l'unité de découpe (60) et comprenant une machine de laminage (621) qui comprend deux rouleaux de laminage (622) pour laminer les deux films imprimés (25) ensemble.
